Europäisches Patentamt

European Patent Office

Office européen des brevets

(19)

(11) Veröffentlichungsnummer: **0 014 404**
**B1**

(12) **EUROPÄISCHE PATENTSCHRIFT**

(45) Veröffentlichungstag der Patentschrift: **11.04.84**

(21) Anmeldenummer: **80100418.5**

(22) Anmeldetag: **28.01.80**

(51) Int. Cl.³: **B 60 C 11/00, B 60 C 11/06**

(54) **Fahrzeugluftreifen mit einem profilierten Laufstreifen.**

(30) Priorität: **05.02.79 DE 7903083 U**

(43) Veröffentlichungstag der Anmeldung:
**20.08.80 Patentblatt 80/17**

(45) Bekanntmachung des Hinweises auf die Patenterteilung:
**11.04.84 Patentblatt 84/15**

(84) Benannte Vertragsstaaten:
**AT BE CH DE FR GB IT NL SE**

(56) Entgegenhaltungen:
**DE - A - 2 003 877**
**DE - A - 2 127 469**
**LU - A - 66 464**
**US - A - 2 756 798**
**US - A - 3 818 965**

(73) Patentinhaber: **Continental Gummi-Werke Aktiengesellschaft**
**Königsworther Platz 1**
**D-3000 Hannover 1 (DE)**

(72) Erfinder: **von der Wall, Klaus**
**Blumenweg 4**
**D-3051 Wölpinghausen (DE)**

Courier Press, Leamington Spa, England.

Fahrzeugluftreifen mit einem profilierten Laufstreifen

Die Erfindung bezieht sich auf einen Fahrzeugluftreifen mit einem profilierten Laufstreifen, der seitlich außen Umfangsbänder aufweist, deren äußerer Rand aus Vorsprüngen besteht, welche durch quer zur Reifenumfangsrichtung verlaufende Nuten voneinander getrennt sind und sich im Umfangsrichtung des Reifens unterschiedlich weit seitlich nach außen hin erstrecken, wobei in Reifenumfangsrichtung gesehen jeder zweite Vorsprung die gleiche Quererstreckung hat.

In der Veröffentlichung LU—A—66 464 wird ein Radialreifen für Lastkraftwagen beschrieben, der im Seitenbereich des Laufstreifens Querrillen aufweist, zwischen denen grobe Stollen angeordnet sind. Dabei wechseln sich seitlich weiter hervorstehende Stollen mit weniger weit hervorstehenden ab, so daß die weiter hervorstehenden in Umfangsrichtung gesehen gewisse Angriffsflächen aufweisen, die die Griffigkeit des Reifens in beschränktem Maße verbessern können. Diese Flächen sind jedoch so klein, daß eine wesentliche Wirkung nicht erreicht werden kann.

Der Erfindung liegt deshalb die Aufgabe zugrunde, den Laufstreifen seitlich außen, also im Laufflächenrandbereich und zudem im Schulterbereich des Reifenkörpers so zu gestalten, daß diese Reifanabschnitte in verstärktem maße zur Traktionserhöhung beitragen können bzw. eine erhöhte Griffigkeit erhalten.

Diese Aufgabe wird erfindungsgemäß dadurch gelöst, daß die Seitenflächen der kürzeren Vorsprünge in eine flache, am oberen Rand der Reifenseitenwand endende, sowohl seitlich als auch am unteren Rand von scharfen Kanten begrenzte Ausnehmung übergehen, deren im wesentlichen radial verlaufende Ränder mit den seitlichen Rändern der Vorsprünge übereinstimmen, wleche die größte Erstreckung seitlich nach außen haben, und daß die Seitenflächen der kürzeren Vorsprünge im wesentlichen parallel zu den Seitenflächen der längeren Vorsprünge verlaufen.

Dadurch ergibt sich nicht nur eine gesteigerte Griffigkeit am Laufflächenrand, vielmehr wird diese Griffigkeit auch' noch durch die vorgenannten flachen Ausnehmungen erhöht, welche vor allen Dingen bei weichem Untergrund wirksam werden.

Der erfindungsgemäße Reifen unterscheidet sich von dem vorbekannten vor allem dadurch, daß beim ersteren jede Ausnehmung, die von benachbarten Stollen begrenzt wird, zusätzlich zu den scharfen Kanten an den Seiten auch am unteren Rand von einer scharfen Kante begrenzt ist. Dadurch erhalten die Seitenränder zu den benachbareten Vorsprüngen eine über ihre gesamte Länge nahezu gleichbleibende Breite, so daß der Vorteil einer optimalen Angriffsfläche an den Vorsprüngen beim Bewegen des Reifens in wechem Sand erzielt wird.

In der Zeichnung ist ein Ausführungsbeispiel dargestellt, das vorzugsweise verwendet werden soll. Es zeigen:

Fig. 1 einen radialen Teilschnitt durch die Zenitpartie eines Fahrzeuglufreifens und

Fig. 2 eine Teildraufsicht auf die Reifenlauffläche.

Das Mittelteil der Lauffläche wird von zwei Umfangsbändern 1 bestimmt, die von etwa zickzackförmigen Umfangsnuten 2 begrenzt sind. Zu beiden Seiten der Lauffläche befinden sich Umfangsbänder 3, welche seitlich außen etwa auf halber Breite mit quer verlaufenden Nuten 4 versehen sind, zwischen denen in Umfangsrichtung aufeinanderfolgende Vorsprünge 5, 6, bestehen, von denen jeder zweite Vorsprung gegenüber dem zwischen ihnen liegenden Vorsprüngen zurückspringt. Die Seitenflächen 7 der Vorsprünge 6 springen gegenüber den Seitenflächen 8 der Vorsprünge 5 zurück.

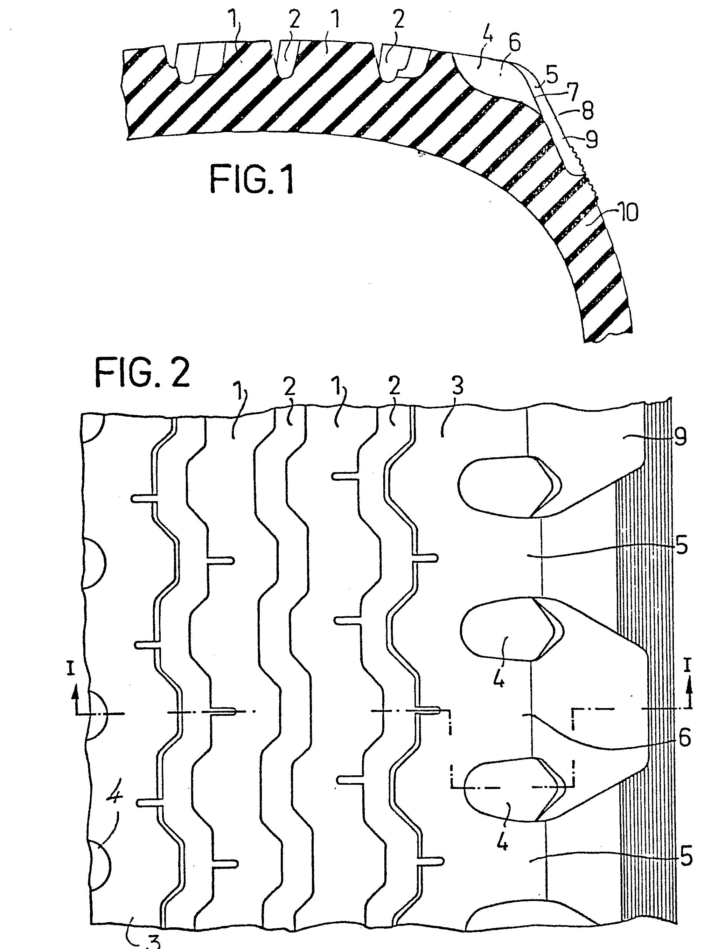

Die Seitenflächen 7 gehen darüber hinaus nach unten in eine flache Ausnehmung 9 über, die etwa am oberen Rand der Reifenseitenwand 10 endet. Von der Seite gesehen ist die Ausnehmung 9 etwa trapezförmig. Ihre seitlichen Ränder verlaufen schräg, und diese bilden die seitliche Begrenzung der Vorsprünge 5. In die Breite der Ausnehmung 9 sind also zwei aufeinanderfolgende Nuten 4 einbezogen, wie dies aus Figur 2 erkennbar ist.

Aufgrund der Erfindung sind somit die auf kleinerem Durchmesser gelegenen unteren Begrenzungskanten der Ausnehmungen 9 und die beiden seitlichen Begrenzungskanten dieser Ausnehmung ihren gegenseitigen Abstand erweiternd schräg nach oben verlaufend angeordnet. Die auf dem kleineren Durchmesser gelegene untere Begrenzungskante der Ausnehmungen 9 hat also eine Länge, die etwa dem gegenseitigen Abstand in Umfangsrichtung aufeinanderfolgender Ausnehmungen 9 entspricht.

**Patentansprüche**

1. Fahrzeuglufttreifen mit einem profilierten Laufstreifen, der seitlich außen Umfangsbänder (3) aufweist, deren äußerer Rand aus Vorsprüngen (5, 6) besteht, welche durch quer zur Reifenumfangsrichtung verlaufende Nuten (4) voneinander getrennt sind und sich in Umfangsrichtung des Reifens unterschiedlich weit seitlich nach außen hin erstrecken, wobei in Reifenumfangsrichtung gesehen jeder zweite Vorsprung die gleiche Quererstreckung hat, dadurch gekennzeichnet, daß die Seitenflächen (7) der kürzeren Vorsprünge (6) in eine flache, am oberen Rand der Reifenseitenwand (10) endende, sowohl seitlich als auch am unteren Rand von scharfen Kanten begrenzte Ausnehmung (9) übergehen, deren im wesentlichen radial verlaufende Ränder mit den seitlichen Rändern der Vorsprünge übereinstimmen, welche die größte Erstreckung seitlich nach außen haben und daß die Seitenflächen (7) der kürzeren Vorsprünge (6) im wesentlichen parallel zu den Seitenflächen (8) der längeren Vorsprünge (5) verlaufen.

2. Farhzeugluftreifen nach Anspruch 1, dadurch gekennzeichnet, daß die auf kleinerem Durchmesser gelegene untere Begrenzungskante der Ausnehmung (9) in Reifenumfangsrichtung und die beiden seitlichen Begrenzungskanten der Ausnehmung ihren gegenseitigen Abstand erweiternd schräg nach oben verlaufen angeordnet sind.

3. Fahrzeugluftreifen nach Anspruch 1, dadurch gekennzeichnet, daß sich die Nuten (4) etwa über die halbe Breite der Umfangsbänder (3) erstrecken.

4. Fahrzeugluftreifen nach den Ansprüchen 1 und 2, dadurch gekennzeichnet, daß die auf dem kleineren Durchmesser gelegene untere Begrenzungskante der Ausnehmung (9) eine Länge hat, die etwa dem gegenseitigen Abstand in Umfangsrichtung aufeinanderfolgender Ausnehmungen entspricht.

## Revendications

1. Bandage pneumatique à bande de roulement profilée, qui comporte, latéralement et à l'extérieur, des bandes périphériques (3), dont le bord extérieur est constitué par des saillies (5, 6), séparées les unes des autres par des rainures (4), qui sont perpendiculaires au sens périphérique de pneumatique et qui sétendent sur le côté, sur des distances différentes, vers l'extérieur, dans le sens périphérique du pneumatique, cependant que, vue dans le sens périphérique du pneumatique, une saillie sur deux a la même extension transversale, caractérisé en ce que les surfaces latérales (7) des saillies les plus courtes (6) se transforment en un évidement (9) plat, finissant au bord supérieure du flanc (10) de pneumatique et limité par des arêtes vives aussi bien latéralement que sur le bord inférieur, les bords essentiellement radiaux de cet évidement coïncidant avec les bords latéraux des saillies, qui ont la plus grande extension latéralement vers l'extérieur et en ce que les surfaces latérales (7) des saillies les plus courtes (6) sont essentiellement parallèles aux surfaces latérales (8) des saillies les plus longues (5).

2. Bandage pneumatique suivant la revendication 1, caractérisé en ce que l'arête inférieure de limitation—placée sur un diamètre réduit—de l'évidement (9) est disposée dans le sens périphérique du pneumatique et que les deux arêtes de limitation latérales de l'évidement remontent obliquement en élargissant la distance qui les sépare.

3. Bandage pneumatique suivant la revendication 1, caractérisé en ce que les rainures (4) s'étendent environ sur la demi-largeur des bandes périphériques (3).

4. Bandage pneumatique suivant les revendications 1 et 2, caractérisé en ce que l'arête inférieure de limitation—placée sur le diamètre réduit—de l'évidement (9) a une longueur qui correspond environ à la distance séparant, dans le sens de la périphérie—des évidements qui se suivent.

## Claims

1. Pneumatic vehicle tyre having a profiled tread strip which is provided laterally externally with circumferential bands (3), the outer edge of which comprises projections (5, 6) which are separated from one another by grooves (4) extending transversely to the circumferential direction of the tyre, and said projections extend at different lengths laterally towards the outside in the circumferential direction of the tyre, whereby, when viewed in the circumferential direction of the tyre, every second projection has the same transverse extension, characterised in that the lateral faces (7) of the shorter projections (6) extend into a flat recess (9) which terminates at the upper edge of the lateral wall (10) of the tyre and is defined by sharp edges both laterally and at the lower edge, the edges of said recess extending substantially radially and being identical to the lateral edges of the proejctions which have the greatest extension laterally towards the outside, and in that the lateral faces (7) of the shorter projections (6) extend substantially parallel to the lateral faces (8) of the longer projections (5).

2. Pneumatic vehicle tyre according to claim 1, characterised in that the lower boundary edge of the recess (9), situated on the smaller diameter, extends in the circumferential direction of the tyre, and the two lateral boundary edges of the recess extend inclinedly upwardly with their reciprocal spacing therebetween becoming wider.

3. Pneumatic vehicle tyre according to claim 1, characterised in that the grooves (4) extend over approximately half the width of the circumferential bands (3).

4. Pneumatic vehicle tyre according to claims 1 and 2, characterised in that the lower boundary edge of the recess (9), situated on the smaller diameter, has a length which corresponds to approximately the reciprocal spacing between successive recesses in the circumferential direction.

FIG.1

FIG.2